# EUROPÄISCHE PATENTANMELDUNG

(11) **EP 0 559 634 A1**
(43) Veröffentlichungstag der Anmeldung: **08.09.1993**
(21) Anmeldenummer: 93890023.0
(22) Anmeldetag: 24.02.1993
(51) Int. Cl.: F15B 15/28, G01D 5/16, G01B 7/02

(54) **Wegmesseinrichtung**

(30) Priorität: 02.03.1992 AT 393/92
(71) Anmelder: HOERBIGER VENTILWERKE AKTIENGESELLSCHAFT, A-1110 Wien (AT)
(72) Erfinder: Kiefer, Walter, D-8925 Altenstadt (DE); Kladiwa, Wolfgang, D-8125 Huglfing (DE); Huber, Gerhard, Dipl.Ing., D-8951 Frankenhofen (DE); Stolle, Klaus, Dipl.Ing., D-8925 Altenstadt (DE)
(74) Vertreter: Klein, Adam, Dipl.Ing.

(57) **Zusammenfassung**

Eine Wegmeßeinrichtung für ein in einem Gehäuse (10) bewegbares Bauelement (11) weist ein mit dem Bauelement (11) mitbewegtes Übertragungselement (15) und ein mit dem Gehäuse (10) feststehendes Meßelement (16) auf, welches von einem im wesentlichen streifenförmigen Kraftmeß-Positionswiderstand bzw. FSR-LP (1) gebildet ist. Das Übertragungselement (15) ist beispielsweise von einer Druckkugel (26) gebildet, die senkrecht zur Oberfläche des FSR-LP (1) an diesen angedrückt wird und über ein stangenförmiges Übertragungsglied (21) mit dem Kolbenstangenauge (14) in Verbindung steht.

## Beschreibung

Die Erfindung betrifft eine Wegmeßeinrichtung für ein in einem Gehäuse bewegbares Bauelement, insbesonders für den in einem Zylinder axial bewegbaren Kolben eines druckmittelbetätigbaren Arbeitszylinders, welche ein mit dem Bauelement mitbewegtes Übertragungselement, ein mit dem Gehäuse feststehendes Meßelement und eine angeschlossene Auswerteeinheit aufweist.

Derartige Einrichtungen dienen im wesentlichen dazu, die jeweilige aktuelle Stellung des auf verschiedenste Weise im Gehäuse relativ zu diesem bewegbaren Bauelements zu bestimmen, wobei der erhaltene Meßwert für die Position des Bauelements dann beispielsweise in einer elektronischen Steuereinheit für die Ablaufsteuerung eines bestimmten Vorgangs weiter verwendet werden kann.

Bei bekannten Einrichtungen der eingangs genannten Art werden beispielsweise mechanische Endschalter, Reed-Kontakte oder Hall-Sensoren für einzelne Positionen entlang der Bewegung des Bauelements oder aber aufwendige Inkremental-Weggeber, spindelgesteuerte Winkelgeber oder dergleichen für eine kontinuierliche Wegmessung verwendet. Weiters ist auch die Verwendung von Schiebewiderständen im genannten Zusammenhang bekannt, welche über konstruktiv sehr aufwendige mechanische Übertragungselemente mit dem bewegbaren Bauelement in Verbindung stehen. Allen bekannten Ausführungen haftet der Nachteil einer relativ komplizierten und damit herstellungs-, montage- und wartungsaufwendigen Konstruktion an, wobei zusätzlich noch in den meisten Fällen eine erhöhte Staub- bzw. Schmutzgefährdung besteht, die die Zuverlässigkeit und Genauigkeit der Wegmeßeinrichtung stark beeinträchtigen kann.

Für spezielle Anwendungen ist beispielsweise aus der AT-PS 394.273 eine weitere Einrichtung der eingangs genannten Art bekannt, bei der das Meßelement einen entlang der Bahn eines mit dem Bauelement berührungslos magnetisch gekoppelten Stellschlittens außen am Gehäuse angeordneten Widerstandskörper aufweist an dem ein Schleifkontakt des Stellschlittens anliegt, womit keine seitliche Öffnung des Gehäuses zur Koppelung der festzustellenden Bewegung mit dem dies ermöglichenden Meßelement notwendig ist.

Aufgabe der vorliegenden Erfindung ist es, eine Einrichtung der eingangs genannten Art so auszubilden, daß die genannten Nachteile der bekannten derartigen Einrichtungen vermieden werden und daß insbesonders auf einfache Weise eine funktionssichere Wegmessung der beschriebenen Art beispielsweise an druckmittelbetätigbaren Arbeitszylindern und ohne Einschränkungen hinsichtlich der Verwendbarkeit, z.B. durch eine magnetische Koppelung bzw. die damit erforderlichen Materialien bzw. auch im Hinblick auf Korrosionsanfälligkeit an einem Schleifkontakt bzw. den damit zusammenwirkenden Teilen und auch hinsichtlich des Einsatzes in explosionsgefährdeter Umgebung, ermöglicht wird.

Dies wird gemäß der vorliegenden Erfindung bei einer Wegmeßeinrichtung der genannten Art dadurch erreicht, daß das Meßelement einen im wesentlichen streifenförmigen Kraftmeß-Positionswiderstand (FSR-LP), und das Übertragungselement ein im wesentlichen senkrecht zur Oberfläche des Kraftmeß-Positionswiderstandes (FSR-LP) an diesen angedrücktes Druckelement aufweist, dessen Position relativ zu den Enden des FSR-LP über die Auswerteeinheit bestimmbar ist.

Kraftmeß-Positionswiderstände (Force Sensing Resistor-Linear Potentiometer - FSR-LP) sind oberflächlich betrachtet Folienschalter, welche aber im Gegensatz zu konventionellen derartigen Schaltern ihren Widerstand bei in Normalrichtung aufgebrachtem Druck ändern. So kann beispielsweise durch einen Fingerdruck von 10 g bis 1 kg auf einen FSR-Sensor bewirkt werden, daß dessen meßbarer Widerstand linear von etwa 400 kΩ auf 40 kΩ abfällt. Derartige Sensoren eignen sich daher ideal für Berührungssteuerungen, bei denen halbquantitative Sensoren erwünscht sind, die relativ preiswert, dünn, haltbar und widerstandsfähig gegen Umwelteinflüsse sind. Druck- und Positionssensoren (Force and Position Sensing Resistor - FPSR) können die Position und die in Normalrichtung aufgebrachte Druckbelastung eines Auslösers, z.B. eines Fingers oder eines Schreibers entlang einer Linie erkennen, wobei je nach Anordnung Positionsauflösungen bis zu 0,05 mm erreicht werden.

Der einfache Foliendrucksensor (Force Sensing Resistor - FSR) basiert auf zwei Polymerfilmen. Auf einen der Polymerfilme ist ein Leiterbild in Form eines Satzes kammartig ineinandergreifender Elektroden aufgetragen, die üblicherweise eine Fingerbreite und einen Fingerabstand von etwa 0,4 mm haben. Auf dem anderen Polymerfilm ist ein Halbleiterpolymer aufgetragen. Die beiden Lagen sind mit den Vorderseiten so aufeinandergelegt, daß die Kontaktfinger durch das leitende Halbleiterpolymer parallel geschaltet werden. Wird kein Druck auf die Verbundeinheit ausgeübt, ist der Widerstand zwischen den einzelnen Fingern des Leiternetzes üblicherweise im Bereich > 1 Megaohm. Mit zunehmender Druckbelastung nimmt der Widerstand näherungsweise entsprechend einer Exponentialfunktion ab.

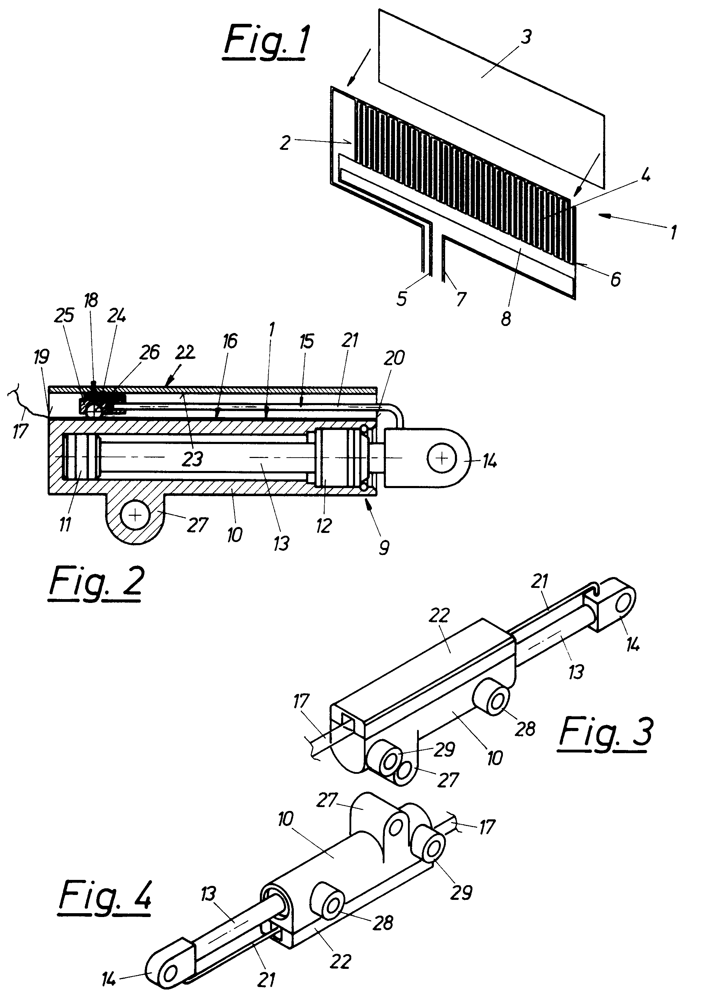

Der oben angesprochene FSR-LP ist nicht nur druckempfindlich sondern mißt auch die Position eines beaufschlagten Druckes entlang des Sensorstreifens. Bezüglich Aufbau und Wirkungsweise siehe auch die untenstehende Beschreibung zu Fig. 1 in der Zeichnung.

Der große Vorteil der beschriebenen Einrichtung nach der Erfindung mit dem im wesentlichen streifenförmigen FSR-LP besteht darin, daß das Gesamtsystem damit unabhängig von den verwendeten Materialien (magnetisch, nicht magnetisch ...), unabhängig gegen Flüssigkeiten bzw. Spritzwasser und auch unabhängig vom zu messenden bzw. zu überwachenden Hub, den zugehörigen Durchmessern und Konturen usw. ist. Da zufolge des beschriebenen Prinzips des Aufbaus des Meßelements bzw. der Messung selbst nahezu keine Ströme fließen, ist das Gesamtsystem von vornherein explosionsgeschützt und praktisch korrosionssicher, wobei die Auswertung der Messung durch das zur Verfügung stehende absolute Ausgangssignal vereinfacht wird.

Der FSR-LP kann in Ausgestaltung der Erfindung in Bewegungsrichtung des Bauelementes seitlich am Gehäuse angeordnet sein, wobei das Druckelement über ein im wesentlichen parallel zur Bewegungsrichtung des bewegbaren Bauelementes verlaufendes stangenförmiges Übertragungsglied mit diesem verbunden ist. Damit ist für beide Bewegungsrichtungen des Bauelementes nur eine einseitige Ankoppelung des Druckelementes erforderlich, welche über das beispielsweise direkt mit einem Kolbenstangenauge verbundene Übertragungsglied erfolgt. Davon abgesehen könnte aber bei zweiseitiger Herausführung der Kolbenstange natürlich auch ein Seilzug oder dergleichen zur Koppelung des Druckelementes mit dem bewegbaren Bauelement verwendet werden. Da über einen Seilzug die Bewegung des Bauelementes auch sehr einfach umgelenkt werden kann, wäre für diesen Fall die Anordnung und Ausführung des FSR-LP in weiten Grenzen variierbar bzw. an den jeweiligen Anwendungsfall anpaßbar.

Gemäß einer bevorzugten Ausgestaltung der Wegmeßeinrichtung mit stangenförmigem Übertragungsglied zwischen bewegbarem Bauelement und Druckelement ist das Letztgenannte zusammen mit dem FSR-LP in einem Führungskanal angeordnet, an dessen dem FSR-LP abgewandter Seite das Druckelement über ein federndes Schleifelement abgestützt ist. Damit ergibt sich über den gesamten. Hub der zu überwachenden Bauelementbewegung eine gleiche Andrückkraft zwischen Druckelement und FSR-LP, was die Messung bzw. Auswertung der Messung vereinfacht, da an sich bei derartigen Sensorelementen Druck- und Positionsmessung nicht vollkommen unabhängig voneinander sind.

Gemäß einer anderen bevorzugten Ausgestaltung der Erfindung kann der FSR-LP aber auch auf einer, vorzugsweise geneigt und/oder gekrümmt verlaufenden Führungsbahn am Gehäuse angeordnet sein, wobei das stangenförmige Übertragungsglied an zumindest einem Ende der Führungsbahn axial beweglich gelagert ist. Damit ergibt sich die Andrückung des Druckelementes während dessen mit dem Bauelement gekoppelter Bewegung an den FSR-LP aus der Federwirkung bzw. Elastizität des von der Lagerung her freien Bereiches des stangenförmigen Übertragungsgliedes, wobei über die Neigung bzw. Krümmung der Führungsbahn am Gehäuse auf die Gleichmäßigkeit bzw. auf den Verlauf der Andrückkraft über den gesamten Hub Einfluß genommen werden kann. Abgesehen von der damit in Längsrichtung des FSR-LP gegebenen Neigung bzw. Krümmung kann der Sensorstreifen aber in gewissen Grenzen auch ohne weiteres quer zu seiner Längserstreckung gebogen werden, was erforderlichenfalls eine Anpassung an die zylindrische Außenkontur eines Zylinders oder dergleichen ermöglicht.

In besonders bevorzugter Ausgestaltung der Erfindung ist vorgesehen, daß das Druckelement eine in einem Aufnahmeelement gehaltene Druckkugel aufweist, welche an ihrer dem FSR-LP zugewandten Seite vorzugsweise abgeflacht ist. Über die Größe dieser Kugel bzw. der Abflachung kann sehr leicht und wirkungsvoll die Fläche der Einwirkung des Druckelementes auf den FSR-LP variiert werden, was vielfältigste Anpassungen an den jeweiligen Anwendungsfall ermöglicht.

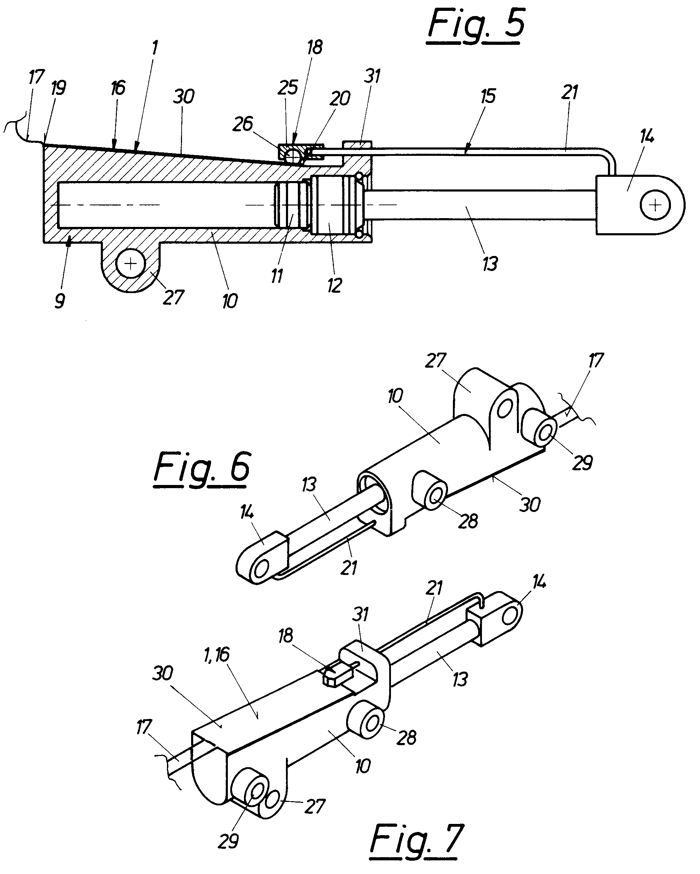

Die Erfindung wird im folgenden noch anhand der teilweise schematischen Zeichnungen näher erläutert. Fig. 1 zeigt dabei die prinzipielle Ausbildung eines in der erfindungsgemäßen Wegmeßeinrichtung zur Verwendung kommenden Kraftmeß-Positionswiderstandes (FSR-LP), Fig. 2 zeigt einen Längsschnitt durch einen mit einer erfindungsgemäßen Wegmeßeinrichtung ausgerüsteten druckmittelbetätigbaren Arbeitszylinder, Fig. 3 zeigt eine perspektivische Draufsicht auf den Arbeitszylinder nach Fig. 2, Fig. 4 eine entsprechende Draufsicht auf den umgedrehten Arbeitszylinder nach Fig. 3, Fig. 5 zeigt eine andere Ausführung eines druckmittelbetätigbaren Arbeitszylinders im Längsschnitt mit einer anders ausgebildeten Wegmeßeinrichtung nach der vorliegenden Erfindung und Fig. 6 und 7 zeigen wiederum perspektivische Ansichten des Zylinders nach Fig. 5 von unten bzw. oben.

Der Kraftmeß-Positionswiderstand bzw. FSR-LP (Force Sensing Resistor-Linear Potentiometer) 1 nach Fig. 1 besteht im wesentlichen aus zwei Polymerfilmen 2, 3, welche übereinandergelegt und gegebenenfalls mit geeigneten Deckschichten versehen gemeinsam streifenförmig ausgebildet verwendet werden. Auf dem Polymerfilm 2 ist ein Leiterbild 4 in Form eines Satzes ineinandergreifender Elektrodenfinger aufgetragen, wobei dieses Elektrodennetz üblicherweise eine Fingerbreite und einen Fingerabstand von etwa 0,4 mm hat. Der Polymerfilm 3 weist ein bestimmtes Halbleiterpolymer auf, welches die Elektrodenfinger des Leiterbildes 4 beim Anliegen parallel schaltet. Wird kein Druck auf diese Verbundeinheit aus den beiden Polymerfilmen 2, 3 ausgeübt, ist der Widerstand zwischen den einzelnen Elektrodenfingern des Leiterbildes 4 üblicherweise im Bereich > 1 Megaohm. Mit zunehmender Druckbelastung nimmt der Widerstand näherungsweise entsprechend einer Exponentialfunktion ab, wobei in dem üblicherweise in Betracht kommenden Druckbereich eine Widerstandsänderung im Größenbereich bis zu drei Zehnerpotenzen beobachtet werden kann.

Zur Messung der Position eines beaufschlagten Druckes entlang des streifenförmigen FSR-LP 1 wird gewöhnlich zwischen der Erdungsseite 5 und dem unter Spannung stehenden Ende des Festwiderstandstreifens eine Spannung angelegt. Wird nun auf die druckempfindliche Schicht ein Druck ausgeübt, so werden die entsprechenden Elektrodenfinger durch die Halbleiterpolymerschicht zu den anderen Elektrodenfingern des Widerstandstreifens parallel geschaltet. Die damit insgesamt abgelesene Spannung ist somit proportional zur Entfernung entlang des FSR-LP 1, wobei der serielle Widerstand der Elektrodenfingeranordnung selbst mit dem Druck variiert.

Um den Druck selbst zu messen kann zwischen dem Elektrodenterminal und entweder dem Spannungsende 7 oder der Erdungsseite 5 (oder beiden miteinander verbunden) des Festwiderstandstreifens 8 eine Widerstandsmessung durchgeführt werden. Es ist dabei klar, daß damit Druck- und Positionsmessungen nicht vollkommen unabhängig voneinander sind. Die Positionsmessungen können jedoch eindeutig ausgeführt werden, wenn die Gesamtanordnung nur einen vernachlässigbar kleinen Strom (etwa < 1µA) zieht und es daher praktisch zu keinem Spannungsabfall über den Elektrodenfingerwiderstand kommt.

In Fig. 2 ist nun ein druckmittelbetätigbarer Arbeitszylinder 9, beispielsweise ein Hydraulikzylinder, dargestellt, der einen in einem Zylinder 10 axial bewegbaren Kolben 11 aufweist, der mittels einer durch eine Führungs- und Abdichtungseinheit 12 nach außen geführten Kolbenstange 13 mit einem Kolbenstangenauge 14 in Verbindung steht. Weiters ist eine Wegmeßeinrichtung für das im Gehäuse (Zylinder 10) bewegbare Bauelement (Kolben 11) vorgesehen, welche ein mit dem Kolben 11 über das Kolbenstangenauge 14 mitbewegtes Übertragungselement 15, ein mit dem Zylinder 10 feststehendes Meßelement 16 und eine hier nicht dargestellte, über ein Anschlußkabel 17 angeschlossene Auswerteeinheit aufweist. Das Meßelement 16 weist einen gemäß Fig. 1 ausgebildeten, im wesentlichen streifenförmigen Kraftmeß-Positionswiderstand bzw. FSR-LP 1 und das Übertragungselement 15 ein im wesentlichen senkrecht zur Oberfläche des FSR-LP 1 an diesen angedrücktes Druckelement 18 auf, dessen Position relativ zu den Enden 19, 20 des FSR-LP 1 auf zu Fig. 1 beschriebene Weise bestimmbar ist.

Der FSR-LP 1 ist hier in Bewegungsrichtung des Bauelementes bzw. Kolbens 11 seitlich am Gehäuse bzw. Zylinder 10 angeordnet, wobei das Druckelement 18 über ein im wesentlichen parallel zur Bewegungsrichtung des Kolbens 11 verlaufendes stangenförmiges Übertragungsglied 21 mit diesem verbunden ist. Das Druckelement 18 ist zusammen mit dem FSR-LP 1 in einem Führungskanal 22 angeordnet, an dessen dem FSR-LP 1 abgewandter Seite 23 das Druckelement 18 über ein federndes Schleifelement 24 abgestützt ist. Das Druckelement 18 selbst weist eine in einem Aufnahmeelement 25 gehaltene Druckkugel 26 auf, die an ihrer dem FSR-LP 1 zugewandten Seite abgeflacht ist.

Der Vollständigkeit halber ist hier auch noch auf einen durchbohrten Ansatz 27 zur Befestigung des Zylinders 10 an hier nicht weiter dargestellten Bauelementen sowie auf die nur aus den Fig. 3 und 4 ersichtlichen Druckmediumanschlüsse 28, 29 zur Verstellung des Kolbens 11 hinzuweisen.

Bei einer druckmittelbedingten Verstellung des Kolbens 11 aus der in Fig. 2 dargestellten linken Endstellung nach rechts wird über die Kolbenstange 13, das Kolbenstangenauge 14 und das Übertragungsglied 21 auch das Druckelement 18 und damit die Druckkugel 26 relativ zum Meßelement 16 bzw. zum FSR-LP 1 nach rechts bewegt, wobei über das Schleifelement 24 ein im wesentlichen gleichmäßiger Druck auf die Druckkugel 26 bzw. von dieser auf den FSR-LP 1 ausgeübt wird. Damit kann auf zu Fig. 1 beschriebene Weise stets die aktuelle Position der Druckkugel 26 relativ zum FSR-LP 1 bestimmt werden, was zufolge der starren Verbindung mit dem Kolben 11 gleichzeitig die Bestimmung der jeweiligen Position des Kolbens 11 im Zylinder 10 mit den bereits obenstehend beschriebenen Vorteilen erlaubt.

Bei der Anordnung nach den Fig. 5 bis 7 sind zu den Fig. 1 bis 4 zumindest von der Funktion her gleiche Teile mit gleichen Bezugszeichen versehen. Zur Vermeidung von Wiederholungen wird bezüglich der Ausgestaltung und Funktion dieser Teile auf die obigen Ausführungen verwiesen.

Als einzige wesentliche Abweichung gegenüber der oben beschriebenen Ausführungsform ist nun hier der FSR-LP 1 auf einer geneigt verlaufenden Führungsbahn 30 am Gehäuse bzw. Zylinder 10 angeordnet, wobei das stangenförmige Übertragungsglied 21 an einem Ende der Führungsbahn 30 axial beweglich in einem Lager gelagert ist. Soferne der Kolben 11 von der in Fig. 5 dargestellten rechten Endstellung druckmittelbetätigt nach links bewegt wird, verlängert sich das vom Lager 31 her freie Ende des für die Andrückung des Druckelementes 18 bzw. der Druckkugel 26 sorgenden Übertragungsgliedes 21, womit an sich mit größer werdendem Weg auch die zwischen der Druckkugel 26 und dem FSR-LP 1 wirksame Andrückkraft kleiner würde. Um dies zu verhindern ist die Führungsbahn 30 nach links hin ansteigend ausgebildet, wobei bedarfsweise auch über eine Krümmung der Führungsbahn 30 Einfluß auf die Änderung des Anpreßdruckes entlang des Weges bzw. direkt auf das schlußendlich erhaltene Meßsignal genommen werden kann. Abweichend davon könnte aber auch bei gerade verlaufender Führungsbahn das Lager 31 schräg verlaufend ausgerichtet sein um die Andrückkraft entsprechend zu beeinflussen.

## Patentansprüche

1. Wegmeßeinrichtung für ein in einem Gehäuse bewegbares Bauelement, insbesonders für den in einem Zylinder axial bewegbaren Kolben eines druckmittelbetätigbaren Arbeitszylinders, welche ein mit dem Bauelement mitbewegtes Übertragungselement, ein mit dem Gehäuse feststehendes Meßelement und eine angeschlossene Auswerteeinheit aufweist, **dadurch** **gekennzeichnet**, daß das Meßelement (16) einen im wesentlichen streifenförmigen Kraftmeß-Positionswiderstand (FSR-LP) (1), und das Übertragungselement (15) ein im wesentlichen senkrecht zur Oberfläche des Kraftmeß-Positionswiderstandes (FSR-LP) (1) an diesen angedrücktes Druckelement (18) aufweist, dessen Position relativ zu den Enden (19,20) des FSR-LP (1) über die Auswerteeinheit bestimmbar ist.

2. Wegmeßeinrichtung nach Anspruch 1, dadurch gekennzeichnet, daß der FSR-LP (1) in Bewegungsrichtung des Bauelementes (11) seitlich am Gehäuse (10) angeordnet ist und daß das Druckelement (18) über ein im wesentlichen parallel zur Bewegungsrichtung des bewegbaren Bauelementes (11) verlaufendes stangenförmiges Übertragungsglied (21) mit diesem verbunden ist.

3. Wegmeßeinrichtung nach Anspruch 2, dadurch gekennzeichnet, daß das Druckelement (18) zusammen mit dem FSR-LP (1) in einem Führungskanal (22) angeordnet ist, an dessen dem FSR-LP (1) angewandter Seite (23) das Druckelement (18) über ein federndes Schleifelement (24) abgestützt ist.

4. Wegmeßeinrichtung nach Anspruch 2, dadurch gekennzeichnet, daß der FSR-LP (1) auf einer, vorzugsweise geneigt und/oder gekrümmt verlaufenden Führungsbahn (30) am Gehäuse (10) angeordnet ist und daß das stangenförmige Übertragungsglied (21) an zumindest einem Ende der Führungsbahn (30) axial beweglich gelagert ist.

5. Wegmeßeinrichtung nach einem der Ansprüche 1 bis 4, dadurch gekennzeichnet, daß das Druckelement (18) eine in einem Aufnahmeelement (25) gehaltene Druckkugel (26) aufweist, welche an ihrer dem FSR-LP (1) zugewandten Seite vorzugsweise abgeflacht ist.
